# EUROPÄISCHE PATENTANMELDUNG

(11) **EP 4 390 809 A1**
(43) Veröffentlichungstag der Anmeldung: **26.06.2024**
(21) Anmeldenummer: 23214851.0
(22) Anmeldetag: 07.12.2023
(51) Int. Cl.: G06Q 10/087, G06Q 30/0601

(54) **GETEILTER ELEKTRONISCHER WARENKORB MIT EINER HIERARCHIE**

(30) Priorität: 20.12.2022 DE 102022134051
(71) Anmelder: Netzsch-Gerätebau GmbH, 95100 Selb (DE)
(72) Erfinder: Dollinger, Markus, 95126 Schwarzenbach (DE)

(57) **Zusammenfassung**

Verfahren zum Bestellen von Produkten unter Verwendung eines geteilten elektronischen Warenkorbs mit einer Hierarchie, umfassend: Freigeben eines Produkts für den Warenkorb durch eine mindestens Entität einer ersten Ebene der Hierarchie; Generieren einer Kennung für den Warenkorb durch mindestens eine Entität einer zweiten Ebene der Hierarchie; Teilen der Kennung für den Warenkorb mit einer Vielzahl von Entitäten einer dritten Ebene der Hierarchie, durch mindestens eine Entität der zweiten Ebene; Auswählen des Produkts durch mindestens eine Entität der Vielzahl von Entitäten der dritten Ebene als eine Position in dem Warenkorb; Prüfen des Warenkorbs durch mindestens eine Entität der zweiten Ebene; und Bestellen gemäß dem Ergebnis des Prüfens durch mindestens eine Entität der ersten Ebene oder mindestens eine Entität der zweiten Ebene.

## Beschreibung

### TECHNISCHES GEBIET DER ERFINDUNG

Die Erfindung betrifft einen geteilten elektronischen Warenkorb und zugehörige Verfahren und Systeme zum Steuern des geteilten Warenkorbs mittels einer Hierarchie, und insbesondere ein Berechtigungssystem zum Steuern und Verwalten des geteilten Warenkorbs innerhalb von geschlossenen Organisationen.

### TECHNISCHER HINTERGRUND

Elektronische Warenkörbe oder webbasierte Einkaufswagen werden regelmäßig zur Abwicklung von Einkaufs- und/oder Bestellvorgängen auf elektronischen Plattformen verwendet, um einem Benutzer diese Vorgänge zu erleichtern. Beispielsweise stellt der Online-Marktplatz Ebay einen elektronischen Warenkorb bereit, in dem Artikel gespeichert werden können und gespeichert bleiben, während ein Benutzer weiter einkaufen kann. Der Benutzer kann schließlich zu einer elektronischen Kasse gehen und einen oder mehrere der gespeicherten Artikel bezahlen. Aus der EP 3 376 457 A1 ist die Bezahlung eines Auftrages durch eine Vielzahl von Bezahlenden bekannt.

Aus der US 2006/122895 A1 ist auch eine Verknüpfung zwischen einem Einkaufswagen eines Käufers und einem anderen Einkaufswagen bekannt. Mittels Zugriffsprivilegien kann dem Käufer mit dem einen Einkaufswagen erlaubt werden, auf Gegenstände in dem anderen Einkaufswagen zuzugreifen.

US 6,876,977 B1 offenbart ferner einen elektronischen Warenkorb, der selektiv in eine Vielzahl von Zuständen versetzt werden kann und es einer Vielzahl von Benutzern ermöglicht gleichzeitig auf den Warenkorb zuzugreifen. Zusätzliche Schritte umfassen die Zuweisung von unterschiedlichen Fähigkeiten zur Beeinflussung des Zustands des Warenkorbs an jeden der Benutzer, so dass es den Benutzern gestattet ist, gleichzeitig den Status des Warenkorbs zu sehen und nacheinander den Zustand des Warenkorbs zu beeinflussen, um gemeinsam Artikel zum Kauf auszuwählen und zu genehmigen.

Die aus dem Stand der Technik bekannten elektronischen Warenkörbe oder webbasierten Einkaufswagen haben jedoch den Nachteil, dass diese nicht zentral verwaltet und gesteuert sind. Innerhalb von geschlossenen Organisationen kommt es so zu ineffizienten Bestellprozessen mit beispielsweise redundanten Bestellungen und/oder mehrfachen Bestellungen. Dadurch entstehen erhöhte Aufwendungen und/oder verfügbare Mengenrabatte werden nicht genutzt, obwohl diese bei einer gemeinsamen Bestellung zur Verfügung stünden.

Eine der Aufgaben der Erfindung besteht somit darin einen geteilten elektronischen Warenkorb und zugehörige Verfahren und Systeme zum Steuern des geteilten Warenkorbs bereitzustellen, um einen Bestellprozess über eine Organisation hinweg zu vereinfachen. Der Bestellprozess soll einfach zu verwalten und zu steuern sein.

Eine weitere Aufgabe der Erfindung besteht darin für eine oder mehrere Organisationen Sammelbestellungen zu ermöglichen, um beispielsweise Aufwendungen für den Versand, wie Verpackung und Transport zu verringern oder verfügbare Einsparungen wie Rabatte zu realisieren.

Eine noch weitere Aufgabe der Erfindung besteht darin die Planbarkeit der Bestellungen zu verbessern, beispielsweise mittels Anbindung an ein Enterprise Resource Planning (ERP) System und/oder mittels einer Automatisierung unter Verwendung von künstlicher Intelligenz.

### ZUSAMMENFASSUNG DER ERFINDUNG

Die Erfindung löst die oben genannten Aufgaben. Insbesondere wird eine Bestellprozess für mehrere Besteller in einer oder in mehreren Abteilungen einer Organisation vereinheitlicht, um von Skalierungseffekten, wie beispielsweise verringerten technischen Aufwänden zur Verarbeitung von Bestellungen und/oder Kostenersparnissen aufgrund von größeren Bestellmengen zu profitieren.

Gemäß einem Aspekt der Erfindung umfasst ein Verfahren zum Bestellen von Produkten unter Verwendung eines geteilten elektronischen Warenkorbs mit einer Hierarchie, umfassend: Freigeben eines Produkts für den Warenkorb durch mindestens eine Entität einer ersten Ebene der Hierarchie; Generieren einer Kennung für den Warenkorb durch mindestens eine Entität einer zweiten Ebene der Hierarchie; Teilen der Kennung für den Warenkorb mit einer Vielzahl von Entitäten einer dritten Ebene der Hierarchie, durch mindestens eine Entität der zweiten Ebene; Auswählen des Produkts durch mindestens eine Entität der Vielzahl von Entitäten der dritten Ebene als eine Position in dem Warenkorb; Prüfen des Warenkorbs durch mindestens eine Entität der zweiten Ebene; und Bestellen gemäß dem Ergebnis des Prüfens durch mindestens eine Entität der ersten Ebene oder mindestens eine Entität der zweiten Ebene.

Gemäß einem weiteren Aspekt der Erfindung umfasst ein System zum Bestellen von Produkten unter Verwendung eines geteilten elektronischen Warenkorbs mit einer Hierarchie, umfassend: Mittel konfiguriert zum Freigeben eines Produkts für den Warenkorb durch mindestens eine Entität einer ersten Ebene der Hierarchie; Mittel konfiguriert zum Generieren einer Kennung für den Warenkorb durch mindestens eine Entität einer zweiten Ebene der Hierarchie; Mittel konfiguriert zum Teilen der Kennung für den Warenkorb mit einer Vielzahl von Entitäten einer dritten Ebene der Hierarchie, durch mindestens eine Entität der zweiten Ebene; Mittel konfiguriert zum Auswählen des Produkts durch mindestens eine Entität der Vielzahl von Entitäten der dritten Ebene als eine Position in dem Warenkorb; Mittel konfiguriert zum Prüfen des Warenkorbs durch mindestens eine Entität der zweiten Ebene; und Mittel konfiguriert zum Bestellen gemäß dem Ergebnis des Prüfens durch mindestens eine Entität der ersten Ebene oder mindestens eine Entität der zweiten Ebene.

Weitere vorteilhafte Ausgestaltungen und Weiterbildungen ergeben sich aus den Unteransprüchen sowie aus der Beschreibung unter Bezugnahme auf die Figur.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand des in der schematischen Figur angegebenen Ausführungsbeispiels näher erläutert. Es zeigt dabei:

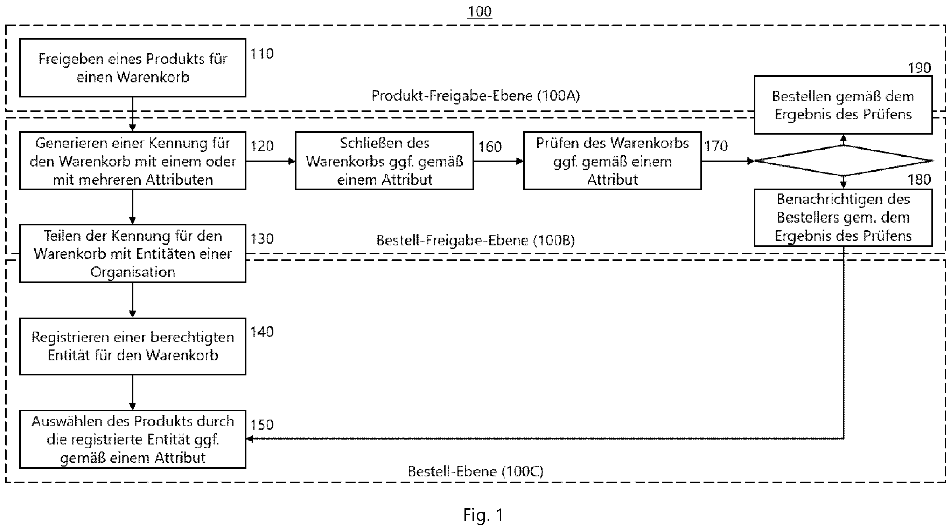

- Fig. 1: Beispielhafter Ablauf einer Bestellung eines Produktes unter Verwendungen eines geteilten elektronischen Warenkorbs mit einer Hierarchie.

Die beiliegende Figur soll ein weiteres Verständnis der Ausführungsformen der Erfindung vermitteln. Sie veranschaulicht eine Ausführungsform und dient im Zusammenhang mit der Beschreibung der Erklärung von Prinzipien und Konzepten der Erfindung. Andere Ausführungsformen und viele der genannten Vorteile ergeben sich aus der Figur. Die Elemente der Zeichnungen dienen nicht der Beschränkung auf die spezifische Ausgestaltung der gezeigten Figur.

### BESCHREIBUNG VON AUSFÜHRUNGSBEISPIELEN

Fig. 1 zeigt einen beispielhaften Ablauf 100 einer Bestellung eines Produktes unter Verwendungen eines geteilten elektronischen Warenkorbs mit einer Hierarchie. Der Ablauf umfasst eine Vielzahl von Schritten und die Hierarchie. Jeder Schritt ist mindestens einer hierarchischen Ebene zugeordnet. Eine Entität der jeweiligen Ebene ist zum Ausführen des jeweiligen Schrittes berechtigt. Es können auch mehrere Entitäten, einzeln oder gemeinsam, zum Ausführen des jeweiligen Schrittes berechtigt sein. Die Hierarchie des Ablaufs kann eine Vielzahl von Ebenen umfassen. In dem in Fig. 1 gezeigten, bevorzugten Beispiel umfasst die Hierarchie drei Ebenen, die Produkt-Freigabe-Ebene 100A, die Bestell-Freigabe-Ebene 100B, und die Bestell-Ebene 100C.

### Produkt-Freigabe-Ebene 100A

Eine Entität der Produkt-Freigabe-Ebene 100A kann eine oder mehrere natürliche Personen einer Organisation und/oder ein künstliche Intelligenz sein. Die Entität der Produkt-Freigabe-Ebene 100A ist zum Freigeben 110 eines Produktes für einen Warenkorb berechtigt. Eine Entität der Produkt-Freigabe-Ebene 100A kann auch zum Bestellen gemäß einem geprüften Warenkorb berechtigt sein. Eine Entität der Produkt-Freigabe-Ebene 100A kann auch dazu berechtigt sein Kataloge von unterschiedlichen Lieferanten an den Warenkorb anzubinden, beispielsweise unter Verwendung eines vordefinierten Standardformats, welches beispielsweise eine elektronisch Schnittstelle zu einem oder zu mehreren Lieferanten ermöglicht.

### Die Bestell-Freigabe-Ebene 100B

Eine Entität der Bestell-Freigabe-Ebene 100A kann eine oder mehrere natürliche Personen einer Organisation und/oder ein künstliche Intelligenz sein. Eine Entität der Bestell-Freigabe-Ebene 100B ist zum Generieren 120 einer Kennung (beispielsweise einer "Shopping Cart ID", SCID) für einen Warenkorb berechtigt. Eine Entität der Bestell-Freigabe-Ebene 100B kann ferner dazu berechtigt sein für den Warenkorb Attribute zu definieren. Attribute des Warenkorbs können mindestens eines oder mehrere sein von einem Bestellvermerk, einer Frist, nach der keine Produkte mehr zum Warenkorb hinzugefügt werden können, ein Bestellfenster mit Start- und Enddatum, ein Budget oder Beschaffungsgrenzen pro Organisation, pro Suborganisation, oder pro Besteller, oder die Organisation, welche zum Bestellen unter Verwendung des Warenkorbes berechtigt ist (vgl. Bestell-Ebene 100C). Insbesondere kann ein Attribut ein Schwellenwert für die Anzahl eines spezifischen Produktes sein, der zu überschreiten ist, bevor der Warenkorb geschlossen wird.

Eine Entität der Bestell-Freigabe-Ebene 100B ist zum Teilen 120 und zum Schließen 160 des Warenkorbs berechtigt, ggf. unter den Beschränkungen gemäß den definierten Attributen. Der Warenkorb kann auf der Bestell-Freigabe-Ebene 100B auch manuell geschlossen werden. An einem geschlossenen Warenkorb können auf der Bestell-Ebene 100C keine weiteren Änderungen mehr vorgenommen werden, während Änderungen auf der Bestell-Freigabe-Ebene 100B im Rahmen einer Prüfung weiterhin möglich sind.

Eine Entität der Bestell-Freigabe-Ebene 100B kann somit zum Prüfen 170 des Warenkorbs berechtigt sein, ggf. unter Berücksichtigung eines Attributs wie beispielsweise das Erreichen eines Schwellenwerts. Als Ergebnis des Prüfens 170 können auf der Bestell-Ebene 100C Entscheide getroffen und/oder Aktionen eingeleitet werden. Entscheide können beispielsweise ein Zurückweisen, ein Priorisieren, ein Zurückstellen, ein Freigeben der Bestellung eines im Warenkorb als Position abgelegten Produkts oder eine Kombination davon umfassen. Zusätzlich zu oder anstelle einer Entität der Bestell-Freigabe-Ebene 100B kann auch eine Entität der Produkt-Freigabe-Ebene 100A zum Bestellen 190 gemäß dem geprüften Warenkorb berechtigt sein.

Eine Aktion kann beispielsweise ein Benachrichtigen 180 eine Bestellers gemäß dem Ergebnis des Prüfens 170 sein und/oder ein Bestellen 190 gemäß dem Ergebnis des Prüfens sein.

### Bestell-Ebene 100C

Eine Entität der Bestell-Freigabe-Ebene 100A kann eine oder mehrere natürliche Personen einer Organisation und/oder ein künstliche Intelligenz sein. Eine Entität der Bestell-Ebene 100C kann, wie eine Entität der Bestell-Freigabe-Ebene 100B, zum Teilen 120 des Warenkorbs berechtigt sein, ggf. unter den Beschränkungen gemäß den definierten Attributen, beispielsweise mit der Einschränkung, dass der Warenkorb nur mit den Entitäten einer Organisation geteilt werden kann. Auf der Bestell-Ebene 100C kann eine Entität aber auch berechtigt sein den Warenkorb mit beliebig vielen weiteren Entitäten innerhalb und/oder außerhalb einer Organisation oder Suborganisation zu teilen.

Eine Entität auf der Bestell-Ebene 100C kann sich für den Warenkorb Registrieren 140. Das Registrieren 140 der berechtigten Entität für den Warenkorb kann bspw. durch Angabe einer E-Mail, einer Kostenstelle, einer Abteilung der Organisation, einer Adresse der Entität oder eine Kombination davon erfolgen. Ein Authentifizieren der registrierten Entität zum Verifizieren der Berechtigung der Entität für den Warenkorb ist auch möglich. Eine registriere Entität auf der Bestell-Ebene 100C kann zum Auswählen 150 eines Produkts berechtigt sein, um dieses als eine Position in den Warenkorb zu legen. Die Berechtigung kann der registrieren Entität auch wieder entzogen werden, bspw. durch ein Sperren der Entität von dem System. Bis zum Schließen des Warenkorbs auf der Bestell-Freigabe-Ebene 130 können auf der Bestell-Ebene Änderungen am Warenkorb vorgenommen werden, beispielsweise ein Löschen einer Position. Auf der Bestell-Ebene kann eine Entität nur zum Ändern von eigenen Positionen berechtigt sein. Auf der Bestell-Ebene kann eine Entität ferner berechtigt sein Attribute für eine Position anzugeben. Attribute für eine Position können mindestens eines sein von einer Bemerkung, einer Begründung oder einer Priorität.

Positionen mit niedriger Priorität können auf der Bestell-Freigabe-Ebene 100B zurückgestellt werden. Werden auf der Bestell-Freigabe-Ebene 100B Änderungen am Warenkorb vorgenommen, z. B. eine Bestellung zurückgestellt oder abgelehnt, kann eine Entität auf der Bestell-Ebene 100C anhand der Registrierung über die Änderung auf der Bestell-Freigabe-Ebene 100B informiert werden.

### Beispielhaftes chronologisches Verfahren

Ein Verfahren zum Bestellen unter Verwendung eines geteilten elektronischen Warenkorbs mit einer Hierarchie kann einen oder mehrere der der folgenden Schritte umfassen: Freigeben 110 eines Produkts für einen Warenkorb durch eine Entität einer ersten Ebene 100A einer Hierarchie; Generieren 120 einer Kennung für den Warenkorb mit einem oder mit mehreren Attributen durch eine Entität einer zweiten Ebene 100B der Hierarchie; Teilen 130 der Kennung für den Warenkorb mit einer Vielzahl von Entitäten einer dritten Ebene 100C der Hierarchie, durch mindestens eine Entität der zweiten Ebene 100B; Registrieren 140 für den Warenkorb durch eine Entität der dritten Ebene 100C. Auswählen 150 des Produkts durch die registrierte Entität der dritten Ebene 100C; Schließen 160 des Warenkorbs durch eine Entität der zweiten Ebene 100B; Prüfen 170 des Warenkorbs durch eine Entität der zweiten Ebene 100B; Benachrichtigen 180 der Entität der dritten Ebene 100C gemäß dem Ergebnis des Prüfens 170 durch eine Entität der zweiten Ebene 100B; und Bestellen 190 gemäß dem Ergebnis des Prüfens 170 durch eine Entität der ersten Ebene 100A oder der zweiten Ebene 100B.

Ein Verfahren kann auch ein Generieren eines geteilten elektronischen Warenkorbs mit einer Hierarchie basieren auf einem früheren geteilten elektronischen Warenkorbs mit einer Hierarchie beinhalten (nicht gezeigt in Fig. 1). Beispielswiese kann das oben beschriebene beispielhafte Verfahren diesen Schritt beinhalten.

Das Generieren eines Warenkorb kann auch ein Analysieren eines Bestellverhaltens von Entitäten oder von Gruppen von Entitäten einer Ebene einer Hierarchie umfassen, um Bestellvorschläge zu erzeugen, unter Verwendung von künstlicher Intelligenz. Bestellvorschläge können beispielsweise mit zeitlichen Intervallen oder mit einem Jahresbedarf assoziiert sein, oder einem Verhalten von einer oder von mehreren Entitäten. Optional sind auch feste Beschaffungszyklen einstellbar, um einen Warenkorb automatisch zu generieren. Entität der dritten Ebene 100C können automatisch und wiederkehrend über den generierten Warenkorbs informiert werden.

### Beispielhafte Computerprogrammprodukte

Einer oder mehrere der oben beschriebenen Verfahrensschritte können in einem Computerprogrammprodukt implementiert sein. Insbesondere können die Verfahrensschritte einer Ebene der Hierarchie in einem jeweiligen Computerprogrammprodukt implementiert sein, um den Warenkorb gemäß den Berechtigungen der jeweiligen Ebene zu verwenden und oder zu steuern.

### Beispielhaftes System

Ein verteiltes System zum Durchführen des Verfahren zum Bestellen unter Verwendung eines geteilten elektronischen Warenkorbs mit einer Hierarchie kann ganz oder teilweise Cloudbasiert sein und/oder einen oder mehrere Prozessoren und einen oder mehrere kommunikativ gekoppelte, nicht-flüchtige computerlesbare Speichermedien umfassen, die einzeln oder insgesamt konfiguriert sind, um einen oder mehrere der oben beschriebenen Verfahrensschritte durchzuführen. Insbesondere können einzelne Vorrichtungen des Systems einzeln konfiguriert sein, um Verfahrensschritte einer Ebene der Hierarchie durchzuführen, um den Warenkorb gemäß den Berechtigungen der jeweiligen Ebene zu verwenden und oder zu steuern.

In der vorangegangenen detaillierten Beschreibung sind verschiedene Merkmale zur Verbesserung der Stringenz der Darstellung in einem oder mehreren Beispielen vereinfacht beschrieben und/oder zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen.

In den Ansprüchen sowie der Beschreibung werden die Begriffe "beinhaltend" und "aufweisend" als neutralsprachliche Begrifflichkeiten für den entsprechenden Begriff "umfassend" verwendet. Weiterhin soll eine Verwendung der Begriffe "ein", "einer" und "eine" eine Vielzahl derartig beschriebener Merkmale und Komponenten nicht grundsätzlich ausschließen.

## Patentansprüche

1. Verfahren (100) zum Bestellen von Produkten unter Verwendung eines geteilten elektronischen Warenkorbs mit einer Hierarchie, umfassend:
Freigeben (110) eines Produkts für den Warenkorb durch mindestens eine Entität einer ersten Ebene (100A) der Hierarchie;
Generieren (120) einer Kennung für den Warenkorb durch mindestes eine Entität einer zweiten Ebene (100B) der Hierarchie;
Teilen (130) der Kennung für den Warenkorb mit einer Vielzahl von Entitäten einer dritten Ebene (100C) der Hierarchie, durch mindestens eine Entität der zweiten Ebene (100B);
Auswählen (150) des Produkts durch mindestens eine Entität der Vielzahl von Entitäten der dritten Ebene (100C) als eine Position in dem Warenkorb;
Prüfen (170) des Warenkorbs durch mindestens eine Entität der zweiten Ebene (100B); und
Bestellen (190) gemäß dem Ergebnis des Prüfens (170) durch mindestens eine Entität der ersten Ebene (100A) oder mindestens eine Entität der zweiten Ebene (100B).

2. Verfahren (100) nach Anspruch 1, wobei das Generieren (120) der Kennung umfasst:
Definieren von Attributen für den Warenkorb durch die mindestens eine Entität der zweiten Ebene (100B).

3. Verfahren (100) nach irgendeinem der Ansprüche 1 bis 2, wobei das Definieren von Attributen für den Warenkorb umfasst:
Definieren eines Schwellenwerts für die zu bestellende Anzahl des Produktes.

4. Verfahren (100) nach irgendeinem der Ansprüche 1 bis 3, ferner umfassend:
Registrieren (140) für den geteilten Warenkorb durch die mindestens eine Entität der dritten Ebene (100C).

5. Verfahren (100) nach irgendeinem der Ansprüche 1 bis 4, ferner umfassend:
Schließen (160) des Warenkorbs durch die mindestens eine Entität der zweiten Ebene (100B).

6. Verfahren (100) nach irgendeinem der Ansprüche 1 bis 5, wobei das Prüfen (170) des Warenkorbs mindestens eines umfasst von:
Zurückweisen einer Position im Warenkorb;
Priorisieren einer Position im Warenkorb;
Zurückstellen einer Position im Warenkorb; und
Freigeben einer Position im Warenkorb.

7. Verfahren (100) nach irgendeinem der Ansprüche 1 bis 6, ferner umfassend:
Benachrichtigen (180) der mindestens einen Entität der Vielzahl von Entitäten der dritten Ebene (100C) gemäß dem Ergebnis des Prüfens (170).

8. Verfahren (100) nach irgendeinem der Ansprüche 1 bis 7, ferner umfassend:
Analysieren eines Bestellverhaltens der mindestens einen Entität der Vielzahl von Entitäten der dritten Ebene (100C) unter Verwendung von künstlicher Intelligenz.

9. Verfahren (100) nach Anspruch 8, ferner umfassend:
Erzeugen eines Bestellvorschlags basierend auf einem Ergebnis des Analysierens des Bestellverhaltens.

10. System zum Bestellen von Produkten unter Verwendung eines geteilten elektronischen Warenkorbs mit einer Hierarchie, umfassend:
Mittel konfiguriert zum Freigeben (110) eines Produkts für den Warenkorb durch mindestens eine Entität einer ersten Ebene (100A) der Hierarchie;
Mittel konfiguriert zum Generieren (120) einer Kennung für den Warenkorb durch mindestens eine Entität einer zweiten Ebene (100B) der Hierarchie;
Mittel konfiguriert zum Teilen (130) der Kennung für den Warenkorb mit einer Vielzahl von Entitäten einer dritten Ebene (100C) der Hierarchie, durch mindestens eine Entität der zweiten Ebene (100B);
Mittel konfiguriert zum Auswählen (150) des Produkts durch mindestens eine Entität der Vielzahl von Entitäten der dritten Ebene (100C) als eine Position in dem Warenkorb;
Mittel konfiguriert zum Prüfen (170) des Warenkorbs durch mindestens eine Entität der zweiten Ebene (100B); und
Mittel konfiguriert zum Bestellen (190) gemäß dem Ergebnis des Prüfens (170) durch mindestens eine Entität der ersten Ebene (100A) oder mindestens eine Entität der zweiten Ebene (100B).
